# EUROPEAN PATENT APPLICATION

(11) **EP 1 215 802 A2**
(43) Date of publication of application: **19.06.2002**
(21) Application number: 01309392.7
(22) Date of filing: 06.11.2001
(51) Int. Cl.: H02K 5/02, H02K 11/00, H02K 5/167

(54) **Composite material motor housing**

(30) Priority: 18.12.2000 US 740228 P
(71) Applicant: Meritor Heavy Vehicle Technology LLC, Troy, Michigan 48084 (US)
(72) Inventor: Clark, Nathan Allan, Warren, Michigan 48093 (US)
(74) Representative: Jones, John Bryn

(57) **Abstract**

A composite motor housing is used with a motor of a window regulator. A magnet is inserted within the housing to assist the motor in spinning. A ferrous magnet housing lines the interior surface of the body portion of the motor housing to prevent the magnetic field produced by the magnet from escaping from the motor housing and affecting other components of the vehicle door. A bearing is molded into the top portion of the motor housing. In an alternative embodiment, the motor housing is formed of a ferrous matrix composite material, eliminating the need for the ferrous magnet housing. In another alternative embodiment, the bearing is integrated into the top portion of the motor housing, eliminating the need for a molded in bearing.

## Description

### BACKGROUND OF THE INVENTION

The present invention relates generally to a motor housing and to a vehicle closure drive. More particularly, the present invention relates to an overmoulded composite motor housing for use with a window regulator of a vehicle door and a vehicle closure drive.

A power window in a vehicle door opens and closes by the actuation of a motor. While this invention specifically illustrates a door window, the invention extends to other closures such as sunroofs, seat adjusting systems, etc. Thus, the invention extends to all closures for vehicle openings. Prior art motors are housed within a motor housing formed from coated sheet steel by a progressive stamping operation. The progressive stamping operation minimizes the formation of cracks, but is expensive and requires a series of steps.

A magnet is inserted into the housing to generate a magnetic field which assists in rotation of the motor. As the motor drives within the magnet, the window of the vehicle door moves upwardly and downwardly.

The motor housing is made of sheet steel which is typically coated to prevent corrosion. The coating is usually a zinc-aluminum alloy. However, this coating is complex and not readily available. Paint or other organic materials can also be utilized as coatings, but are expensive.

There are several drawbacks to utilizing a steel motor housing formed by a progressive stamping operation. For one, the steel motor housing is heavy. Additionally, the process of formation requires several steps, many components and an expensive grade of highly formable steel.

Hence, there is a need in the art for an improved motor housing for use with a window regulator of a vehicle door.

### SUMMARY OF THE INVENTION

The present invention relates generally to an over molded composite motor housing for use with a window regulator of a vehicle door.

In the preferred embodiment, a motor housing for use with a motor of a window regulator is formed of a composite material by injection molding. The hollow motor housing includes a substantially cylindrical body portion and a tapered top portion. A ferrous magnet housing lines the interior surface of the body portion of the motor housing. A pair of magnets are inserted into the motor housing and generate a magnetic field which drives the motor to raise and lower the window. The composite housing material is molded over a ferrous magnet housing, which prevents the magnetic field of the magnet from escaping out of the motor housing and interfering with other components. A bearing is molded into the top portion of the motor housing.

In an alternative embodiment, the motor housing is formed of a ferrous metal matrix composite material. By utilizing a ferrous metal matrix composite material, the ferrous magnet housing is eliminated because the ferrous metal matrix prevents the magnetic field of the magnet from escaping.

In another alternative embodiment, the bearing is integrated into the top portion of the motor housing. By integrating the bearing into the top portion of the motor housing, the molded in bearing is eliminated, reducing the number of components.

Accordingly, the present invention provides an over molded composite motor housing for use with a window regulator of a vehicle door.

These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:
Figure 1 illustrates a front view of a window regulator employed on a vehicle door.
Figure 2 illustrates a side view of the motor housing of the present invention.
Figure 3 illustrates a cross sectional side view of the motor housing of the present invention with a molded-in bearing.
Figure 4 illustrates a cross sectional top view of the body portion of the motor housing of the present invention.
Figure 5 illustrates a cross sectional side view of the body portion of a motor housing of the present invention formed of a ferrous matrix composite material.
Figure 6 illustrates a cross sectional side view of the motor housing of the present invention with an integrated bearing.

### DETAILED DESCRIPTION OF THE PREFERRED EMBODIMENT

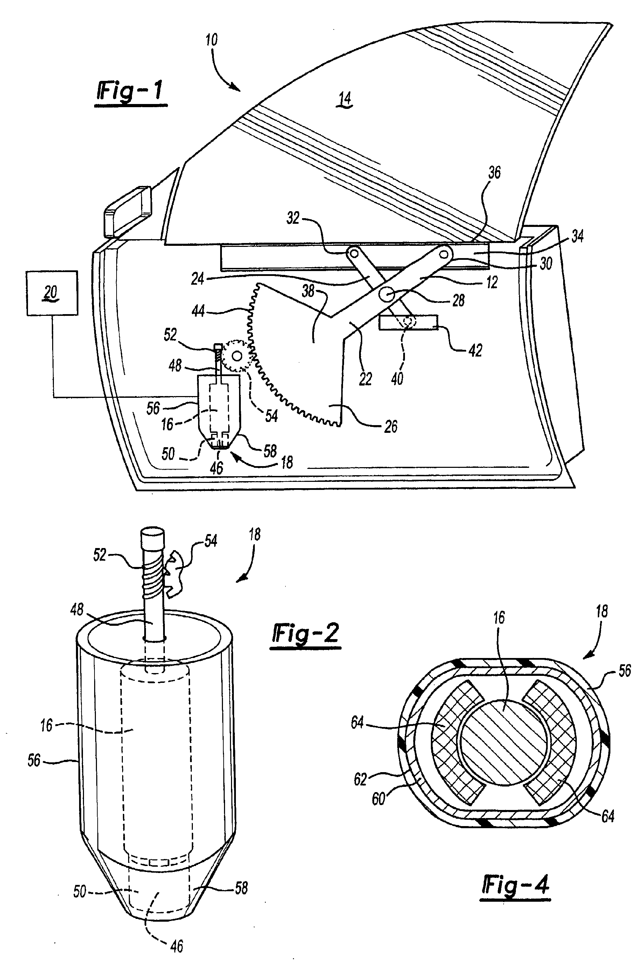

Referring now to the drawings, Fig. 1 illustrates a front view of a vehicle door 10 utilizing an "arm and sector" window regulator 12. The window regulator 12 is powered by a motor 16 housed within a motor housing 18. The window regulator 12 is controlled by a window controller 20, which allows a window 14 to move upwardly and downwardly.

The window regulator 12 includes a pair of pivotally attached arms 22, 24 and a sector 26. The sector 26 is substantially curved and includes a plurality of teeth 44. The size of the several components are not to scale and are only shown to exhibit one type of window drive mechanism. The pair of arms 22, 24 are connected at a pivot point 28 and include a first arm 22 and a second arm 24. Each arm 22, 24 has a first end, 30, 32, respectively, which is slidingly engaged to a first rail 34. The lower edge 36 of the window 14 is attached to the first rail 34, the window 14 moving upwardly and downwardly with the first rail 34.

The first arm 22 further includes a second end 38 connected to the sector 26. The second arm 24 further includes a second end 40 which slidingly engages the second rail 42, the second rail 42 being substantially parallel to the first rail 34. The second rail 42 is stationary and attached to the vehicle door 10.

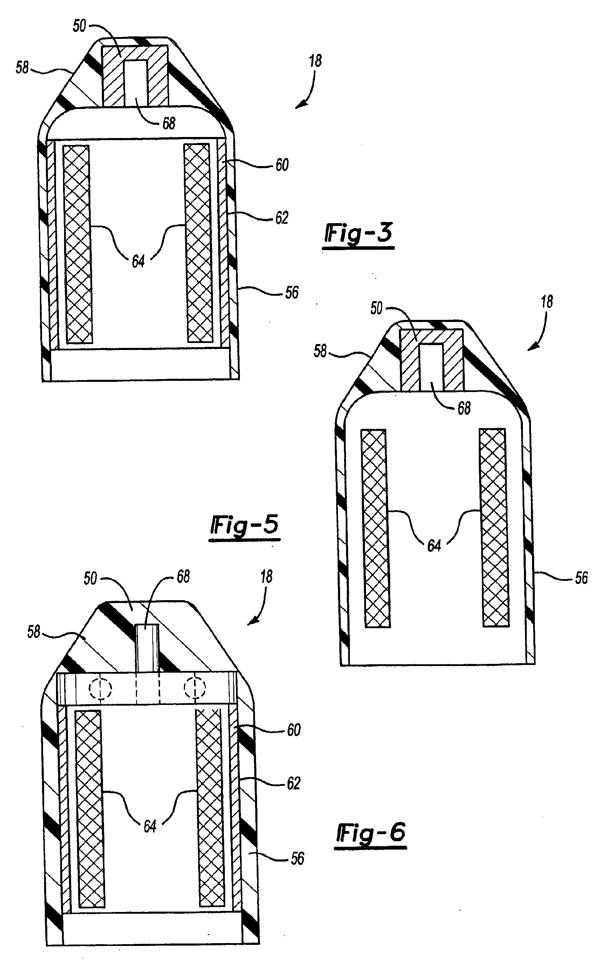

During operation, the motor rotor 16 rotates within the motor housing 18, driving the window 14 upwardly and downwardly. As shown in Figure 2, the motor rotor 16 includes a bearing end 46 and an oppositely positioned gear end 48. The bearing end 46 is inserted within a bearing 50 on the top portion 58 of motor housing 18. The gear end 48 rotates and threads 52 on the gear end 48 engage a gear 54. As known, this moves the window.

Although an "arm and section" window regulator 20 is described, it is to be understood that the motor housing 18 of the present invention can be utilized on any type of window regulator 20 or any type of motor 16. Further, the invention extends to other closures such as sunroofs, etc.

Figures 3 and 4 illustrate a first embodiment of the motor housing 18 of the present invention. The motor housing 18 is formed of a composite material by injection molding. In the preferred embodiment, the hollow motor housing 18 is shaped to receive a motor 16 and includes a substantially cylindrical body portion 56 and a tapered top portion 58.

A substantially cylindrical ferrous magnet housing 60 lines the interior surface 62 of the body portion 56 of the composite motor housing 18. The composite motor housing 18 is molded over the ferrous magnet housing 60. Alternatively, the two oppositely positioned magnet stators 64 are inserted within the motor housing 18. The magnet stators 64 generate magnetic field and assist the inserted motor rotor 16 to drive the window 14. The magnets 64 have a curvature substantially equal to the curvature of the motor rotor 16. As the motor 16 drives, the window 14 is operatively raised and lowered. The ferrous magnet housing 60 controls the magnetic field produced by the magnets 64 by preventing the magnetic field from escaping from the motor housing 18 and disrupting other components in the vehicle door 10.

In another embodiment, as illustrated in Figure 5, the motor housing 18 is formed of a ferrous metal matrix composite material. By utilizing a ferrous metal matrix composite material, the ferrous magnet housing 60 can be eliminated. The ferrous matrix mixed within the composite material prevents the magnetic field of a magnet stators 64 from escaping from the motor housing 18. A sufficient amount of ferrous material is mixed within the composite material to sufficiently prevent the magnetic field from escaping.

A bearing 50 is molded in the top portion 58 of the motor housing 18. The bearing end 46 of the motor rotor 16 is inserted into an aperture 68 located substantially in the center of the bearing 50. As shown in Figure 6, the bearing 50 can also be integrated into the top portion 58 of the motor housing 18, eliminating the need for a molded in bearing 50.

There are several advantages for utilizing an over molded composite motor housing 18 for a motor rotor 16 of a window regulator 12. For one, because the motor housing 18 is formed of a composite material rather than steel, a reduction in weight is possible. Additionally, the motor housing 18 is injection molded in one step, whereas the prior art stamping process required a series of steps. The corrosion preventing coating step is also eliminated as the composite material does not corrode. The composite material provides corrosion resistance without painting or coating the exterior surface of the motor housing 18. Finally, a component can be eliminated by integrating the bearing 50 into the top portion 58 of the composite motor housing 18. The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specially described. For that reason the following claims should be studied to determine the true scope and content of this invention.

## Claims

1. An housing (18) for a motor (16) comprising:
a relatively large hollow body portion (56) formed of a composite material having an interior surface;
a relatively small top portion (58); and
a material (66) to prevent magnetic forces generated by an inserted magnetic material from escaping from said housing.

2. A vehicle closure drive comprising:
a closure (14);
a regulator (12) to move said closure between an open position and a closed position
a motor (16) to drive said regulator; and
a housing (18) to house said motor formed of a composite material including a hollow body (56) having an interior surface and a top portion (58), and a material (66) to prevent magnetic forces generated by a magnetic material from escaping from said housing.

3. The vehicle closure drive or housing as recited in any preceding claim wherein said body portion and said top portion of said housing are both substantially cylindrical in shape.

4. The vehicle closure drive or housing as recited in any preceding claim wherein said material covers said interior surface of said hollow body portion.

5. The vehicle closure drive or housing as recited in any one of claims 1 to 3 wherein said material is mixed within said composite material.

6. The vehicle closure drive or housing as recited in claim 4 or claim 5 wherein said material is ferrous.

7. The vehicle closure drive or housing as recited in any preceding claim wherein said housing further includes a bearing positioned in said top portion of said housing.

8. The vehicle closure drive or housing as recited in claim 7 wherein said bearing is molded in said top portion of said motor housing.

9. The vehicle closure drive or housing as recited in claim 7 wherein said bearing is integrated in said top portion of said motor housing.

10. The vehicle closure drive or housing as recited in any preceding claim wherein said magnetic material is a magnet positioned within said body portion of said housing.
